## Europäisches Patentamt

## European Patent Office

## Office européen des brevets

(19)

(11) Veröffentlichungsnummer: **0 100 507**
**B1**

(12) **EUROPÄISCHE PATENTSCHRIFT**

(45) Veröffentlichungstag der Patentschrift:
**26.10.88**

(21) Anmeldenummer: **83107274.9**

(22) Anmeldetag: **25.07.83**

(51) Int. Cl.⁴: **C 08 G  18/72,** C 08 G  18/08,
C 08 G  18/80, C 08 G  18/48,
C 09 D  3/72, C 09 J  3/16,
C 09 K  3/10

(54) **Lagerstabile, hitzehärtbare Stoffmischungen aus Polyisocyanat und Polyol, Verfahren zu deren Herstellung und Verwendung.**

(30) Priorität: **31.07.82  DE 3228670**
**31.07.82  DE 3228724**

(43) Veröffentlichungstag der Anmeldung:
**15.02.84 Patentblatt 84/7**

(45) Bekanntmachung des Hinweises auf die Patenterteilung:
**26.10.88 Patentblatt 88/43**

(84) Benannte Vertragsstaaten:
**AT BE DE FR IT NL SE**

(56) Entgegenhaltungen:
**EP - A - 0 062 780**
**DE - A - 2 237 674**

(73) Patentinhaber: **BASF Lacke + Farben
Aktiengesellschaft, Max-Winkelmann-Strasse 80,
D-4400 Münster (DE)**

(72) Erfinder: **Blum, Rainer, Bannwasserstrasse 58,
D-6700 Ludwigshafen (DE)**
Erfinder: **Spoor, Herbert, Dr., Woogstrasse 44,
D-6703 Limburgerhof (DE)**
Erfinder: **Holtmann, Gerhard, Dr., Heideggerstrasse 8,
D-4400 Muenster (DE)**
Erfinder: **Osterloh, Rolf, Dr., Am Wehrhaus 16a,
D-6718 Gruenstadt (DE)**

(74) Vertreter: **Rämisch, Friedrich, Dr. et al,
Carl-Bosch-Strasse 38, D-6700 Ludwigshafen (DE)**

## Beschreibung

Die Erfindung betrifft bei Raumtemperatur lagerstabile, hitzehärtbare Stoffmischungen aus Polyisocyanat und Polyol, wobei das Polyisocyanat in Form diskreter Teilchen, die an ihrer Oberfläche desaktiviert sind, im Polyol dispergiert ist, Verfahren zu deren Herstellung und ihre Verwendung.

Die Herstellung von Kombinationen von Polyisocyanaten mit Bindemitteln, die mit Isocyanatgruppen reaktionsfähige Gruppierungen enthalten, und deren unmittelbare Anwendung, ist bekannt.

Grosse Schwierigkeiten bereitet jedoch die Tatsache, dass die Isocyanatgruppe schon bei Raumtemperatur mit den vorgesehenen Reaktionspartnern, z.B. Polyolen oder Polyaminen, reagiert, d.h. es lassen sich keine lagerstabilen Kombinationen formulieren.

Um diese Schwierigkeit zu umgehen, werden häufig Zweikomponentensystem verwendet. Die Reaktionspartner werden dabei in separaten Zubereitungen aufbewahrt und erst unmittelbar vor der Applikation gemischt, worauf die Reaktion dann spontan oder wärme- und/oder katalysatorbeschleunigt abläuft.

Als Beispiel für eine solche Masse sei hier die US-A 4 029 626 genannt. Die Nachteile dieses Verfahrens liegen in der Notwendigkeit getrennter Zubereitung und Lagerung der beiden Komponenten, der Schwierigkeiten beim genauen Dosieren und guten Mischen vor der Applikation und in der Gefahr der Verstopfung des Misch- und Applikationsgerätes durch frühzeitige Reaktion.

Eine andere bekannte Methode zur Herstellung lagerbeständiger Polyisocyanatmassen geht von unvernetzten sogenannten Präpolymeren aus, die nur wenig freies Isocyanat enthalten, wobei als Vernetzungsmittel die Luftfeuchtigkeit dient. Diese Methode wird beispielsweise in der FR-A 1 237 936 beschrieben. Nachteilig ist in diesem Falle, dass die Härtung von der Oberfläche aus nur sehr langsam in die Tiefe der Beschichtung vordringt, die Endeigenschaften erst nach Wochen oder Monaten erreicht werden und z.B. zwischen grossen Flächen oder in Höhlungen gar keine Härtung erfolgt.

Stabile Systeme lassen sich auch formulieren, wenn die Polyisocyanate zunächst mit einem monofunktionellen Reaktionspartner umgesetzt werden. Die erhaltenen Addukte werden als verkappte oder blockierte Isocyanate bezeichnet, wenn sie weniger thermostabil sind als die Produkte der später beabsichtigten Vernetzungsreaktion. Unter Hitzeeinwirkung wird das Verkappungsmittel abgespalten und das Polyisocyanat geht unter Vernetzung die thermostabilere Bindung ein.

Dieses Prinzip wird z.B. in Vieweg/Höchtlen, Kunststoff-Handbuch, Band VII, Polyurethan (Carl Hanser Verlag München, 1966), Seite 11 ff beschrieben und ist auch die Grundlage einer Reihe von Patentanmeldungen, z.B. der DE-A 2 640 295, der DE-A 2 612 638, der DE-A 2 639 491 bzw. der EP-A 0 000 060.

Technische und wirtschaftliche Nachteile solcher Formulierungen ergeben sich aus dem abgespaltenen Verkappungsmittel, das, wenn es in der vernetzten Masse verbleibt, deren Eigenschaften verändert, oder, wenn es verdampft, zurückgewonnen bzw. aus der Abluft entfernt werden muss.

In DE-A 1 570 548, DE-A 2 842 805 und DE-A 2 921 162 werden bei über 100° bzw. bei über 130 °C schmelzende Polyisocyanate beschrieben, die mit speziellen Polyolen lagerstabile Kombinationen ergeben, die sich unter Erwärmung zu Beschichtungen für Gewebe bzw. Gewebeschläuche aushärten lassen.

Der technische Nachteil der diesen Druckschriften zu entnehmenden Kombinationen ist, dass sie, um gute Lagerstabilität zu erreichen, auf eine sehr enge Auswahl speziell aufgebauter Polyole angewiesen sind und daher beispielsweise für eine Reihe von Anwendungen gar nicht geeignet sind.

In der nicht veröffentlichten EP-A 0 062 780 wurde vorgeschlagen, in Stoffmischungen aus Polyisocyanat und Polyol die Polyisocyanatteilchen an ihrer Oberfläche durch Reaktion mit Wasser, primären oder sekundären Aminen, Mono- oder Polyalkoholen so zu «desaktivieren», dass 0,5 bis 20 Äquivalentprozent der insgesamt vorhandenen Isocyanatgruppen umgesetzt sind.

Aufgabe der vorliegenden Erfindung ist es, lagerstabile, hitzehärtbare flüssige bis pastenförmige Stoffmischungen aus Polyisocyanat und Polyol aufzuzeigen, die die oben aufgeführten Nachteile nicht aufweisen und deren Polyisocyanatteilchen an ihrer Oberfläche in noch geringerem Masse modifiziert sind. Der geringere Umsetzungsgrad gestattet es z.B., die Aktivierungstemperatur besser an technische Gegebenheiten der Einbrennanlagen der Automobilindustrie anzupassen.

Gegenstand der vorliegenden Erfindung sind bei Raumtemperatur lagerstabile, hitzehärtbare Stoffmischungen aus Polyisocyanat und Polyol, das gegebenenfalls Schutzkolloide, inerte Lösungsmittel, Weichmacher, Pigmente, Füllstoffe, Farbstoffe oder andere in der Lacktechnik übliche Hilfsstoffe enthält, wobei das Polyisocyanat in Form von diskreten festen Teilchen mit Teilchendurchmessern zwischen 0,1 bis 150 μm im Polyol, das gegebenenfalls die genannten Zusätze enthält, dispergiert ist und die dadurch gekennzeichnet sind, dass die Polyisocyanatteilchen an ihrer Oberfläche durch Reaktion mit einem Desaktivierungsmittel desaktiviert sind, indem entweder 0,1 bis 0,499 Äquivalentprozent der insgesamt vorhandenen Isocyanatgruppen mit primärem oder sekundärem Amin oder Wasser oder indem 1 bis 20 Äquivalentprozent der insgesamt vorhandenen Isocyanatgruppen mit Verbindungen, die Carboxylgruppen, Amidgruppen oder Hydrazidgruppen enthalten, umgesetzt worden sind.

Gegenstand der vorliegenden Erfindung ist ausserdem ein Verfahren zur Herstellung dieser Stoffmischungen, wobei das Polyisocyanat im Polyol dispergiert wird und das Desaktivierungsmittel entweder schon im Polyol enthalten ist oder der Dispersion des Polyisocyanats im Polyol zumindest teilweise nachträglich zugefügt wird oder das Polyisocyanat zunächst vorzugsweise bei Temperaturen unterhalb 40°C mit dem Desaktivierungsmittel behandelt und dann im Polyol dispergiert wird, wobei die Desaktivierungsreaktion durch die Gegenwart geeigneter, selektiv wirkender Katalysatoren gegebenenfalls beschleunigt werden kann.

Zur Beschleunigung und Steuerung der Desaktivierung können auch geeignete und bevorzugt die Desaktivierung selektiv fördernde Katalysatoren mitverwendet werden.

Gegenstand der vorliegenden Erfindung ist auch die Verwendung der erfindungsgemässen Stoffmischungen als Beschichtungsmittel, Verklebungsmittel und Dichtungsmassen auf Metallen und Nichtmetallen sowie insbesondere als Unterbodenschutzmassen und Schalldämpfmassen für Kraftfahrzeuge und als Abdichtmittel für wärme- und schalldämmende mehrfach verglaste Fenster.

Die vorliegende Erfindung vermeidet die Nachteile des oben aufgezeigten Standes der Technik dadurch, dass die Polyisocyanate in Form diskreter Teilchen in den Polyolen dispergiert und die dispersen Teilchen an ihrer Oberfläche durch chemische Reaktionen desaktiviert sind. Für die Desaktivierung wird nur ein sehr geringer Teil der Isocyanatgruppen verbraucht, so dass die Teilchen noch reaktionsfähig bleiben.

Bei der Hitzehärtung wird die Phasentrennung durch Löse- oder Schmelzvorgänge aufgehoben und die Vernetzung kann stattfinden.

Zu den Aufbaukomponenten der erfindungsgemässen Stoffmischungen ist im einzelnen folgendes auszuführen.

Geeignete Polyisocyanate sind die üblichen bei Raumtemperatur festen aliphatischen, cycloaliphatischen und aromatischen Di- und Polyisocyanate, wie sie z.B. erhalten werden durch Addition von Diisocyanaten an Di-, Tri- oder Polyole, oder aus Diisocyanaten durch Dimerisierung zu Uretdionen, Trimerisierung zu Isocyanuraten und mit Aminen oder Wasser zu Biureten. Hierfür sind u.a. z.B. folgende Diisocyanate geeignet: Diphenylmethandiisocyanat, Toluylendiisocyanat, Isophorondiisocyanat und Hexamethylendiisocyanat. Beispiele solcher Polyisocyanate sind Polyisocyanate, das Additionsprodukt aus Toluylendiisocyanat und Trimethylolpropan oder das Cyanurat aus 3 Molen Toluylendiisocyanat und insbesondere schwerlösliches, pulverförmiges dimerisiertes Toluylendiisocyanat mit Uretdiongruppen.

Geeignete Polyole sind die in der Polyurethanchemie üblicherweise verwendeten Polyesterole, Polyetherole und hydroxylgruppenhaltigen Polymerisate, beispielsweise Copolymerisate aus olefinisch ungesättigten Monomeren ohne aktive Wasserstoffe und olefinisch ungesättigten Monomeren mit aktivem Wasserstoff.

Geeignete Monomere ohne aktiven Wasserstoff sind z.B. Vinylaromaten, wie Styrol oder Vinyltoluol, Olefine, wie Ethylen oder Propylen, Acryl- oder Methacrylsäureester, wie z.B. Butylacrylat, 2-Ethylexylacrylat, Methylmethacrylat, Vinylester von geradkettigen oder verzweigten Carbonsäuren, wie z.B. Vinylacetat, Vinylpropionat oder Vinylpivalat sowie Vinylether, wie z.B. Vinylisobutylether.

Geeignete Monomere mit gegenüber Isocyanatgruppen reaktivem Wasserstoff sind z.B. Mono(meth)acrylester von mehrwertigen, insbesondere zweiwertigen Alkoholen, wie z.B. Butandiolmonoacrylat, Hydroxypropyl(meth)acrylat, andere copolymerisierbare olefinisch ungesättigte hydroxylgruppenhaltige Verbindungen, wie z.B. Vinylglykol.

Die erfindungsgemässen Stoffmischungen enthalten die Polyisocyanate in Form diskreter Teilchen mit Teilchendurchmessern zwischen 0,1 bis 150, vorzugsweise 1 bis 50 μm im Polyol dispergiert, wobei Isocyanatgruppen und Hydroxylgruppen im allgemeinen in Mengenverhältnissen von 0,5 : 1 bis 1 : 0,5, vorzugsweise 0,9 : 1 bis 1 : 0,9 vorliegen.

Die Erfindung soll aber durch diese Mengenangaben nicht eingeschränkt werden, für bestimmte Zwecke, z.B. wiederabziehbare Metalletiketten, sind z.B. auch Mischungen mit erheblichem Isocyanatunterschuss geeignet.

Die dispergierten Polyisocyanatteilchen sind an ihrer Oberfläche soweit desaktiviert, dass bei Raumtemperatur keine Reaktion der Polyisocyanatteilchen mit dem Polyol eintritt.

Für die chemische Desaktivierung werden 0,1 bis 0,499, vorzugsweise 0,1 bis 0,4 Äquivalentprozent der insgesamt vorhandenen Isocyanatgruppen mit primärem oder sekundärem Amin oder Wasser als Desaktivierungsmittel oder 1 bis 20, vorzugsweise 1 bis 10 Äquivalentprozent der insgesamt vorhandenen Isocyanatgruppen mit Verbindungen, die Carboxylgruppen, Amidgruppen oder Hydrazidgruppen enthalten, zur Reaktion gebracht.

Dazu kann das Desaktivierungsmittel in den beanspruchten Äquivalenzverhältnissen den Ansätzen zugegeben werden. Ebenfalls geeignet ist ein Verfahren, bei dem das Desaktivierungsmittel in einem Überschuss über das beanspruchte Äquivalenzverhältnis zugegeben wird.

Nach der chemischen Reaktion der NCO-Gruppen an der Oberfläche der dispersen Phase mit dem Desaktivierungsmittel kommt die desaktivierende Reaktion zum Stillstand.

Als Desaktivierungsmittel kommen in Frage: Wasser, Mono- und Polyamine. Besonders gut geeignet sind längerkettige Monoamine, z.B. Stearylamin, die zu einer Art aufgepfropfter Emulgatoren abreagieren. Höhermolekulare Polyamine, wie z.B. Polyamidamine, reagieren unter Ausbildung aufgepfropfter Schutzkolloide. Besonders geeignet zur Desaktivierung der Isocyanatgruppen an der Oberfläche der Polyisocyanatteilchen, d.h. zur Stabilisierung der Isocyanat/Polyol-Dispersionen, sind auch Reaktionen, die auf den Isocyanaten zu Harnstoff- bzw. Polyharnstoffstrukturen führen, weil diese in den meisten Polyolen und organischen Lösungsmitteln unlöslich sind. Solche Harnstoffe bzw. Polyharnstoffe bildenden Reagenzien sind Wasser und primäre oder sekundäre Amine, wobei kurzkettige Diamine, wie Ethylendiamin oder Propylendiamin bevorzugt sind. Die aus diesen Diaminen gebildeten Polyharnstoffe sind organophober als die aus längerkettigen Diaminen gebildeten und wirken deshalb besser stabilisierend. Eine bevorzugte Verfahrensweise geht von schwerlöslichem pulverförmigem dimerisiertem Toluylendiisocyanat aus. Weil Isocyanat mit primären Aminen erheblich schneller reagiert als mit Polyolen, kann durch Einrühren von pulverförmigem dimerisiertem Toluylendiisocyanat in z.B. aminhaltiges Polyetherol unmittelbar eine lagerstabile Mischung erhalten werden.

Ein Vorteil dieses Verfahrens ist dadurch gegeben, dass die Harnstoffstrukturen bei höheren Temperaturen mit weiteren Isocyanaten unter Bildung von Biuretstrukturen weiterreagieren, d.h. das Desaktivierungsmittel wird in das vernetzte System eingebaut und hinterlässt keine Inhomogenität.

Als Desaktivierungsmittel kommen ebenfalls in Frage: Verbindungen, die Carboxylgruppen enthalten, wie z.B. Homo- und Copolymerisate der Acrylsäure, Methacrylsäure, Maleinsäure und anderer polymerisierbarer Säuren, saure Polykondensationsprodukte, wie z.B. mit Säureüberschuss hergestellte Polyester, saure Polymere, die durch Alkoholyse der Reaktionsprodukte von Maleinsäureanhydrid mit ungesättigten Polymeren, z.B. Leinöl oder Polybutadienöl, erhalten werden; Amidgruppen enthaltende Verbindungen, wie z.B. lösliche Polyamide und Polymerisate von Acrylamid und Methacrylamid oder Copolymerisate von Acrylamid und/oder Methacrylamid mit Acrylsäure- und/oder Methacrylsäureestern; Polyhydrazide, die durch Hydrazinolyse von Polyacrylaten erhalten werden und deren Herstellung z.B. von M. Hartmann, R. Dowbenko, U.T. Hockswender in Organic Coatings + Applied Polymer Science 46, 1982, Seite 429 mit 432 beschrieben wird.

Die genannten Desaktivierungsmittel weisen im allgemeinen Molekulargewichte von 200 bis 1 000 000, insbesondere 500 bis 5 000 auf.

Besonders geeignet zur Desaktivierung der Isocyanatgruppen an der Oberfläche der Polyisocyanatteilchen, d.h. zur Stabilisierung der Isocyanat/Polyol-Dispersionen sind Polyacrylsäure, Polymethacrylsäure und Copolymerisate dieser Säuren miteinander oder mit ihren Estern oder Gemischen ihrer Ester und Polyacrylathydrazide.

Vorteile dieser Desaktivierungsmittel sind z.B. bessere Haftung der ausgehärteten Produkte auf Stahlblech und elektrotauchlackiertem Stahlblech.

Auch Gemische der genannten Desaktivierungsmittel mit Wasser und primären oder sekundären Aminen und Polyaminen können gegebenenfalls verwendet werden.

In einer besonderen Ausführung können die Stoffmischungen noch zusätzlich 0,5 bis 60% üblicher Weichmacher, wie Ester der Phthal-, Adipin-, Sebacin- oder Phosphorsäure, hochsiedende Kohlenwasserstoffe, chlorierte Kohlenwasserstoffe, epoxidierte natürliche Öle oder niedermolekulare Polyester enthalten.

Ausführliche Erläuterungen des Begriffes Weichmacher sind in D. Weinmann, Beschichtungen mit Lacken und Kunststoffen, Verlag W.A. Colomb, Stuttgart, 1967, Seite 103 ff, gegeben.

Zur Einstellung auf spezielle Verarbeitungsbedingungen bzw. zur Erzielung besonderer Effekte, können die erfindungsgemässen Stoffmischungen, im allgemeinen im Polyol, Zusätze von Schutzkolloiden, beispielsweise in Mengen von 0,1 bis 15%, inerten sowie gegebenenfalls reaktionsfähigen Lösungsmitteln, wie Benzine, Ester, Ketone, Ether, Glykolether und Pigmenten, wie Russ, Titandioxid, organische und anorganische Farbpigmente, Füllstoffen, wie z.B. Talkum, Tonerde, Kreide und Quarzmehl, Farbstoffen oder anderen in der Lacktechnik üblichen Hilfsstoffen enthalten.

Die Herstellung der erfindungsgemässen Stoffmischungen erfolgt im allgemeinen unter Verwendung üblicher Dispergier- und Mischaggregate. Das Polyisocyanat wird zweckmässigerweise bei Temperaturen unterhalb 40 °C, vorzugsweise bei Temperaturen zwischen 0 und 25 °C im Polyol dispergiert, wobei entweder das Polyol bereits die gesamte Menge des Desaktivierungsmittels enthält, oder das Desaktivierungsmittel kurz nach dem Dispergiervorgang der Mischung zugegeben wird.

Um die Desaktivierung zu steuern und zu beschleunigen, können auch Katalysatoren zugegeben werden. Bevorzugt sind Katalysatoren, die selektiv die Desaktivierung beschleunigen. Die Desaktivierungskatalysatoren können aber auch identisch sein mit den später die bestimmungsgemässe wärmeaktivierte Reaktion beschleunigenden oder steuernden Katalysatoren.

Eine andere Möglichkeit zur Herstellung der erfindungsgemässen Stoffmischungen besteht darin, das Polyisocyanat zunächst, vorzugsweise bei Temperaturen von unterhalb 40 °C, mit dem Desaktivierungsmittel zu behandeln und dann im Polyol zu dispergieren.

Die erfindungsgemässen Stoffmischungen sind bei 25 °C mindestens über 2 Monate gut lagerstabil, ohne dass ein Reaktivitätsverlust oder eine irreversible, die bestimmungsgemässe Verwendung beeinträchtigende, Veränderung der Masse zu beobachten wäre. Eine eventuell auftretende Viskositätserhöhung kann durch einfaches Umrühren beseitigt werden.

Die Härtung der erfindungsgemässen Stoffmischungen erfolgt im allgemeinen bei 70 bis 180 °C.

Die erfindungsgemässen Stoffmischungen können in flüssiger oder pastöser Form verwendet werden und eignen sich als Beschichtungsmittel, Verklebungsmittel und Dichtungsmassen. Als Substrate kommen dabei Metalle, wie Stahl, Aluminium, Kupfer, Magnesium, die auch mit einer Grundierung überzogen sein können, und Nichtmetalle, wie Glas, Keramik, wärmebeständige Kunststoffe und textile Substrate in Frage.

Besonders vorteilhaft lassen sich die erfindungsgemässen Stoffmischungen als Grundierlacke oder als Unterbodenschutzmasse für Kraftfahrzeuge verwenden.

Andere Anwendungen und Vorteile sind z.B. in der besseren Haftung an Glas zu sehen, was die Verwendung als Dichtungs- und Verbindungsmittel für den Aufbau mehrfach verglaster Fenster ermöglicht.

Die in den nachfolgenden Beispielen genannten Teile und Prozente sind, soweit nicht anders angegeben, Gewichtsteile und Gewichtsprozente.

Vergleichsbeispiel 1

90 Teile eines Polyetherdiols auf Basis von Propylenoxid mit einer Molmasse von ca. 450, 140 Teile eines Polyethertriols auf Basis von Glycerin und Propylenoxid mit einer Molmasse von ca. 420, 45 Teile $TiO_2$ (Rutilform), 47,5 Teile Kreidepulver und 2,5 Teile Eisenoxid-schwarz werden in einem gekühlten Dissolver bei ca. 30 bis 35 °C dispergiert, dann wird auf 20 °C gekühlt und feingepulvertes, über Uretdionbindung dimerisiertes 2,4-Toluylendiisocyanat bei ca. 20 bis 25 °C eindispergiert. Zu dieser Mischung werden 1 Teil einer 33%igen Lösung von Diazabicyclooctan in Butylglykol und 114 Teile Xylol unter Rühren zugegeben. Man erhält so einen mit üblichen Spritzpistolen verarbeitbaren Lack, der auf Blechtafeln aufgespritzt, nach einer Wärmebehandlung von 20 Minuten bei 140 °C, eine graue Lackierung ergibt.

Nach einer Lagerung von 3 Tagen bei Raumtemperatur (ca. 20 bis 25 °C) ist der Lack nicht mehr aufrührbar, sondern zu einer bröseligen Masse erstarrt.

Beispiel 1

Es wird wie bei Vergleichsbeispiel 1 verfahren, aber vor Zugabe der Pigmente werden in die Polyol-Mischung 2,8 Teile eines Polyamidoaminharzes mit einer Aminzahl von ca. 200 und einer Viskosität von 52 Pas bei 25 °C eingerührt.

Der erhaltene Lack wird wie der des Vergleichsbeispiels 1 verarbeitet.

Nach einer Lagerung von 2 Monaten lässt sich eine eventuell eingetretene Pigmentsedimentation durch einfaches Rühren beseitigen. Die aus dem gelagerten, aufgerührten Lack erhaltenen Lackfilme zeigen die gleiche Qualität wie die aus frisch hergestelltem Lack.

Beispiel 2

Es wird wie bei Beispiel 1 verfahren, aber das Polyamidaminharz wird erst 10 Minuten, nachdem das feingepulverte Uretdion des 2,4-Toluylendiisocyanats eindispergiert ist, eingerührt.

Es wird ein Lack von der gleichen Lagerstabilität wie bei Beispiel 1 erhalten.

Vergleichsbeispiel 2

140 Teile eines Polyethertriols auf Basis von Glycerin und Propylenoxid mit einer Molmasse von ca. 420, 300 Teile eines Polyetherdiols auf Basis von Propylenoxid mit einer Molmasse von ca. 1000, 50 Teile Kreidepulver, 10 Teile $TiO_2$ (Anatas-Form) und 5 Teile Eisenoxid-gelb werden in einem gekühlten Dissolver bei 30 bis 35 °C dispergiert. Nach Kühlung auf 20 °C werden 136 Teile feinpulvriges über Uretdionbindung dimerisiertes

2,4-Toluylendiisocyanat eindispergiert sowie 3 Teile 33%ige butylglykolische Lösung von Diazabicyclooctan eingerührt. Die erhaltene Masse kann mit einer Einkomponenten-Hochdruckzerstäubungsanlage bei ca. 200 bar auf die Unterseite von Automobilkarossen appliziert werden. Nach einer Wärmebehandlung von 20 Minuten bei 140 °C wird ein feinschaumiger, elastischer Belag ausgebildet, der gegen Korrosion und Steinschlag wirksam schützt. Die Masse muss spätestens ca. 6 Stunden nach Herstellung verarbeitet werden, weil danach die Viskosität rasch ansteigt. Nach ca. 2 Tagen ist die Masse in den Vorratsbehältern erstarrt und nicht wieder aufrührbar.

Beispiel 3

Es wird wie bei Vergleichsbeispiel 2 verfahren, jedoch nachdem das feinteilige dimere 2,4-Toluylendiisocyanat eindispergiert ist, werden 2,2 Teile des in Beispiel 1 angegebenen Polyamidaminharzes eindispergiert. Die erhaltene Masse lässt sich wie in Vergleichsbeispiel 2 gezeigt, als Automobilunterbodenschutzmasse verwenden, ihre Lagerstabilität beträgt mindestens 6 Monate bei Raumtemperatur.

Vergleichsbeispiel 3

160 Teile Polyetherdiol auf Basis von Propylenoxid mit einem Äquivalentgewicht von ca. 1000, einer OH-Zahl von ca. 56 und einer Viskosität von ca. 320 mPas, 70 Teile Polyethertriol auf Basis von Glycerin und Propylenoxid mit einem Äquivalentgewicht von ca. 140, einer OH-Zahl von ca. 400 und einer Viskosität von ca. 365 mPas und 63 Teile durch Uretdionverbindung dimerisiertes 2,4-Toluylendiisocyanat werden unter einem schnelllaufenden Dissolver zu einer gut fliessenden Paste dispergiert. Bei der Dispergierung wird durch Kühlung der Temperaturanstieg auf max. 25 °C begrenzt.

Beispiel 4

Es wird eine Paste, wie beim Vergleichsbeispiel 3 beschrieben, hergestellt. Vor dem Eindispergieren des dimeren Toluylendiisocyanates werden aber in der Polyetherol-Mischung 2,5 Teile einer Polymerdispersion gelöst. Der Polymerbestandteil dieser Dispersion besteht aus einem Copolymerisat von 50 Teilen Acrylsäurebutylester, 25 Teilen Acrylsäure und 25 Teilen Methacrylsäure. Die Polymerdispersion wurde nach dem üblichen Verfahren der Emulsionspolymerisation hergestellt. Nähere Angaben zur Emulsionspolymerisation können z.B. auch B. Vollmert: Grundriss der makromolekularen Chemie, Springer-Verlag, Heidelberg, 1962, Seite 98 und folgende entnommen werden.

Nach der Eindispergierung des dimeren 2,4-Toluylendiisocyanats werden noch 1,5 Teile einer 25%igen butylglykolischen Lösung von Phenylquecksilberpropionat eingerührt.

Prüfung der nach Vergleichsbeispiel 3 bzw. nach dem erfindungsgemässen Beispiel 4 erhaltenen Stoffmischungen:

Eine Paste nach den Angaben des Vergleichsbeispiels 3 wird mit 0,5% 25%iger butylglykolischer Lösung von Phenylquecksilberpropionat katalysiert und ca. 1 mm dick auf zinkphosphatiertes Stahlblech aufgerakelt, ebenso die erfindungsgemässe Paste des Beispiels 4. Beide Proben werden für 20 Minuten auf 140 °C erhitzt, es werden nach dem Wiederabkühlen klare, leicht angeschäumte, elastische Beläge erhalten.

Der Belag, der aus der erfindungsgemässen, mit einem carboxylgruppenterminierten Polymerisat teildesaktivierten und dadurch stabilisierten Paste (Beispiel 4) gebildet wurde, haftet gut am Untergrund.

Der Belag, der aus der nach dem Vergleichsbeispiel 3 hergestellten Paste erhalten wird, lässt sich durch vorsichtiges Ziehen glatt vom Blech lösen.

## Patentansprüche

1. Bei Raumtemperatur lagerstabile, hitzehärtbare Stoffmischungen aus Polyisocyanat und Polyol, das gegebenenfalls Schutzkolloide, inerte Lösungsmittel, Weichmacher, Pigmente, Füllstoffe, Farbstoffe oder andere in der Lacktechnik übliche Hilfsstoffe enthält, wobei das Polyisocyanat in Form von diskreten festen Teilchen mit Teilchendurchmessern zwischen 0,1 bis 150 µm im Polyol, das gegebenenfalls die genannten Zusätze enthält, dispergiert ist, dadurch gekennzeichnet, dass die Polyisocyanatteilchen an ihrer Oberfläche durch Reaktion mit einem Desaktivierungsmittel desaktiviert sind, indem entweder 0,1 bis 0,499 Äquivalentprozent der insgesamt vorhandenen Isocyanatgruppen mit primärem oder sekundärem Amin oder Wasser, oder indem 1 bis 20 Äquivalentprozent der insgesamt vorhandenen Isocyanatgruppen mit Verbindungen, die Carboxylgruppen, Amidgruppen oder Hydrazidgruppen enthalten, umgesetzt worden sind.

2. Stoffmischungen nach Anspruch 1, dadurch gekennzeichnet, dass nach Desaktivierung der Oberfläche der Polyisocyanatteilchen die in der Mischung vorhandenen reaktionsfähigen NCO-Gruppen und die Hydroxylgruppen des Polyols in einem Verhältnis von 1 : 0,5 bis 0,5 : 1 vorliegen.

3. Verfahren zur Herstellung der Stoffmischungen nach Anspruch 1 oder 2, dadurch gekennzeichnet, dass das Polyisocyanat im Polyol dispergiert wird und das Desaktivierungsmittel entweder schon im Polyol enthalten ist oder der Dispersion des Polyisocyanats im Polyol zumindest teilweise nachträglich zugeführt wird.

4. Verfahren zur Herstellung der Stoffmischungen nach Anspruch 1 oder 2, dadurch gekennzeichnet, dass das Polyisocyanat zunächst mit dem Desaktivierungsmittel behandelt und dann im Polyol dispergiert wird.

5. Verwendung der Stoffmischungen nach Anspruch 1 oder 2 als Beschichtungsmittel, Verklebungsmittel oder Dichtungsmassen auf Metallen und Nichtmetallen.

6. Verwendung der Stoffmischungen nach Anspruch 1 oder 2 als Unterbodenschutzmassen für Kraftfahrzeuge.

## Claims

1. A heat-setting mixture which has a long shelf life at room temperature, comprising a polyisocyanate and a polyol which may or may not contain protective colloids, inert solvents, plasticizers, pigments, fillers, dyes or other assistants conventionally used in surface coating technology, the polyisocyanate having been dispersed in the form of discrete, solid particles having a diameter of from 0.1 to 150 µm in the polyol, which may or may not contain the stated additives, wherein the polyisocyanate particles have been deactivated at their surface by reaction with a deactivating agent, by reacting either from 0.1 to 0,499 equivalent percent of the total amount of isocyanate groups present with a primary or secondary amine or water, or by reacting from 1 to 20 equivalent percent of the said isocyanate groups with a compound containing carboxyl, amide or hydrazide groups.

2. A mixture as claimed in claim 1, wherein, after the surface of the polyisocyanate particles has been deactivated, the ratio of the reactive NCO groups present in the mixture to the hydroxyl groups of the polyol is from 1 : 0,5 to 05 : 1.

3. A process for the preparation of a mixture as claimed in claim 1 or 2, wherein the polyisocyanate is dispersed in the polyol, and either the deactivator is already present in the polyol or some or all of it is subsequently added to the dispersion of the polyisocyanate in the polyol.

4. A process for the preparation of a mixture as claimed in claim 1 or 2, wherein the polyisocyanate is first treated with the deactivator and then dispersed in the polyol.

5. Use of a mixture as claimed in claim 1 or 2, as a coating composition, an adhesive or a sealant material on metals and non-metals.

6. Use of a mixture as claimed in claim 1 or 2, as an undersealant for motor vehicles.

## Revendications

1. Mélanges de matières thermodurcissables stables au stockage à température ordinaire, à base de polyisocyanate et polyol, qui contient éventuellement des colloïdes protecteurs, des solvants inertes, des plastifiants, des pigments, des charges, des colorants ou autres auxiliaires usuels dans la technique des vernis et peintures, le polyisocyanate étant dispersé, sous forme de parties solides discrètes de diamètre compris entre 0,1 et 150 µm dans du polyol qui contient éventuellement les additifs indiqués, caractérisés par le fait que les particules de polyisocyanate sont désactivées en surface par réaction avec un désactivant, alors que, soit 0,1 à 0,499 pour cent équivalent de la totalité des groupes isocyanate présents ont été mis à réagir avec une amine primaire ou secondaire ou de l'eau, ou soit 1 à 20 pourcent équivalent de l'ensemble des groupes isocyanate ont été mis à réagir avec des composés qui contiennent des groupes carboxyle, amide ou hydrazide.

2. Mélanges de matières selon la revendication 1, caractérisés par le fait que, après désactivation de la surface des particules de polyisocyanate, les groupes NCO réactifs présents dans le mélange et les groupes hydroxyle du polyol se trouvent en un rapport de 1/0,5 à 0,5/1.

3. Procédé de préparation de mélanges de matières selon la revendication 1 ou 2, caractérisé par le fait que le polyisocyanate est, dispersé dans le polyol et le désactivant est soit déjà contenu dans le polyol, soit ajouté ultérieurement au moins partiellement, à la dispersion du polyisocyanate dans le polyol.

4. Procédé de préparation de mélanges de matières selon la revendication 1 ou 2, caractérisé par le fait que le polyisocyanate est traité d'abord avec le désactivant et dispersé ensuite dans le polyol.

5. Utilisation des mélanges de matières selon la revendication 1 ou 2 comme agents de revêtement, agents de collage ou matières d'étanchéité sur métaux et non-métaux.

6. Utilisation de mélanges de matières selon la revendication 1 ou 2 comme matières de protection de sous-sols pour automobiles.